# EUROPEAN PATENT SPECIFICATION

(11) **EP 2 564 567 B1**
(45) Date of publication and mention of the grant of the patent: **12.03.2014**
(21) Application number: 10776442.5
(22) Date of filing: 21.09.2010
(51) Int. Cl.: H04B 7/06, H04B 7/08, H04L 5/00

(54) **TRANSMITTER, RECEIVER AND METHODS FOR DOWNLINK CONTROL SIGNALLING**
SENDER, EMPFÄNGER UND VERFAHREN ZUR DOWNLINK-STEUERUNGSSIGNALISIERUNG
ÉMETTEUR, RÉCEPTEUR ET PROCÉDÉS DE SIGNALISATION DE COMMANDE DE LIAISON DESCENDANTE

(30) Priority: 30.04.2010 WO PCT/CN2010/000595
(43) Date of publication of application: 06.03.2013
(73) Proprietor: Telefonaktiebolaget LM Ericsson (publ), 164 83 Stockholm (SE)
(72) Inventor: HU, Yang, 100102 (CN); SONG, Xinghua, 100102 (CN); ASTELY, David, S-Bromma 16856 (SE); JÖNGREN, George, S-174 62 Sundbyberg (SE)
(74) Representative: Kühn, Friedrich Heinrich
(86) International application number: PCT/SE2010/051011
(87) International publication number: WO 2011/136710

(56) References cited:
- EP-A1- 2 141 852
- SAMSUNG: "DL transmission modes for Rel-10", 3GPP DRAFT; R1-102208 DLTXMODES, 3RD GENERATION PARTNERSHIP PROJECT (3GPP), vol. RAN WG1, no. Beijing, china; 20100412, 6 April 2010 (2010-04-06), XP050419480,
- Anonymous: "DRAFT TS 36.213 V9.1.0; Technical Specification Group Radio Access Network; Evolved Universal Terrestrial Radio Access (E-UTRA); Physical layer procedures (Release 9)", 3RD GENERATION PARTNERSHIP PROJECT (3GPP) , 21 March 2010 (2010-03-21), pages 1,27-35, XP002627902, Retrieved from the Internet: URL:http://www.3gpp.org/ftp/Specs/archive/ 36_series/36.213/36213-910.zip [retrieved on 2011-03-18]
- Anonymous: "DRAFT TS 36.212 V9.1.0; Technical Specification Group Radio Access Network; Evolved Universal Terrestrial Radio Access (E-UTRA); Multiplexing and channel coding(Release 9)", 3RD GENERATION PARTNERSHIP PROJECT (3GPP) , 30 March 2010 (2010-03-30), pages 1,55-56, XP002627903, Retrieved from the Internet: URL:http://www.3gpp.org/ftp/Specs/archive/ 36_series/36.212/36212-910.zip [retrieved on 2011-03-18]
- ROBERT LOVE ET AL: "PHY 32-1 - Downlink Control Channel Design for 3GPP LTE", CONFERENCE ON WIRELESS COMMUNICATIONS AND NETWORKING. WCNC 2008, 31 March 2008 (2008-03-31), pages 813-818, XP031243734, IEEE, IEEE, PISCATAWAY, NJ, USA ISBN: 978-1-4244-1997-5

## Description

### TECHNICAL FIELD

The present invention relates generally to a transmitter, a receiver and methods therein, and in particular to downlink control signaling design for e.g. LTE-Advanced, such as control signaling design for LTE-A downlink transmission mode.

### BACKGROUND

The 3rd Generation Partnership Project (3GPP) is responsible for the standardization of UMTS (Universal Mobile Telecommunication Service) and LTE (Long Term Evolution). LTE is a technology for realizing high-speed, packet-based communication that can reach high data rates both in the downlink and in the uplink. LTE is considered a next generation mobile communication system relative to UMTS. In order to support high data rates, LTE allows for a system bandwidth of up to 20 MHz. LTE is also able to operate in different frequency bands and can operate in at least FDD (Frequency Division Duplex) and TDD (Time Division Duplex). The modulation technique or the transmission method used in LTE is known as OFDM (Orthogonal Frequency Division Multiplexing).

For the next generation mobile communications system, *e*.*g*., IMT-advanced (International Mobile Telecommunications) and/or LTE-Advanced, which is an evolution of LTE, support for bandwidths of up to 100 MHz is being considered. In both LTE and LTE-Advanced, radio base stations are known as eNBs or eNodeBs, where "e" stands for evolved. Furthermore, multiple antennas with precoding/beamforming technology can be used in order to provide high data rates to user equipments. Thus, LTE and LTE-Advanced are both examples of MIMO (Multiple-Input, Multiple-Output) radio systems. Another example of a MIMO and OFDM based system is WiMAX (Worldwide Interoperability for Microwave Access).

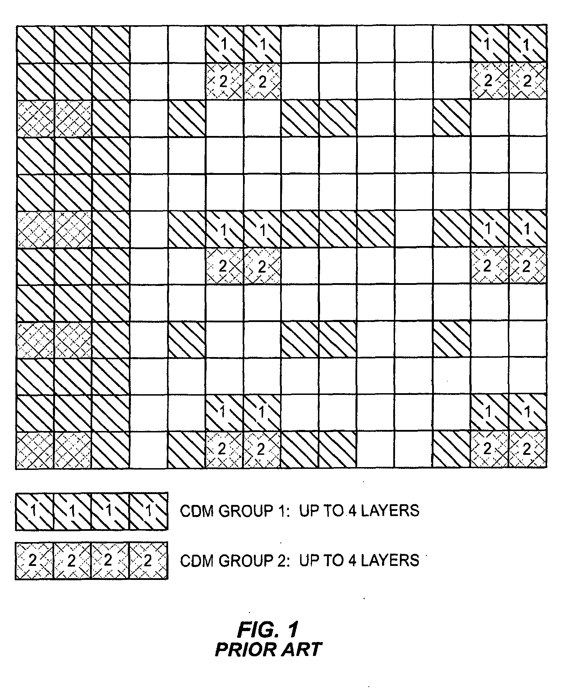

In LTE-Advanced, as specified in 3GPP Release 10 (Rel-10), *e*.*g*., Technical Specification 36.814 V1.5.0 (2009-11), in order to fulfill LTE-Advanced downlink peak spectral efficiency of 30bps/Hz, up to eight layer transmission will be supported using advanced 8x8 high-order MIMO. It is also agreed in Rel-10 that up to eight UE-specific reference signals (called demodulation RS or DM-RS) should be introduced for the purpose of channel demodulation. So far, DM-RS rank 1-8 pattern with normal CP (cyclic prefix) has been decided, as shown in Figure 1.

A total of eight DM-RS ports are defined, multiplexed by CDM+FDM (code and frequency division multiplexing). The DM-RS overhead will be the same, *i*.*e*., twelve resource elements (RE) per layer. Up to two CDM groups are supported, FDM. Each CDM group has up to four DM-RS ports. DM-RS port numbering is defined as CDM group 1: ports 7/8/11/13; and CDM group 2: ports 9/10/12/14. Orthogonal cover codes (OCC) are defined across the time domain only.

Figure 1 depicts a DM-RS pattern supporting up to rank eight transmission. In the case of Rel-9 dual layer beamforming, *i*.*e*., downlink transmission mode eight (TM8), only CDM group 1 (denoted by the numeral "1") is used while the REs reserved for CDM group 2 (denoted by the numeral "2") are used for data transmission.

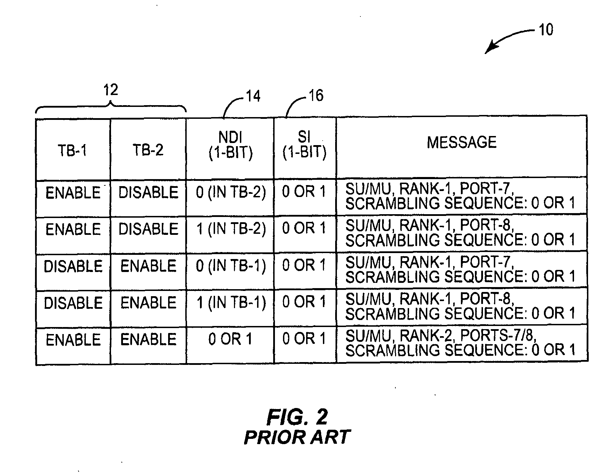

Downlink Control Information (DCI) format 2B has been defined in 3GPP TS 36.212 v9.0.0 (2009-12). DCI format 2B enables dynamic rank adaptation between rank-1 and rank-2, as well as transparent configuration of single-user (SU) case and multi-user (MU) case, where DM-RS ports 7/8 with up to two scrambling sequences are dynamically allocated. Figure 2 depicts a table 10 listing different application cases that are implicitly indicated by some information carried in DCI format 2B. The information is encoded by disabled/enabled transport blocks (TB) 12, a 1-bit new data indicator (NDI) 14, and a 1-bit scrambling identity (SI) 16. These bits encode the information listed in the "Message" column.

Document 3GPP Draft R1-102208 "DL transmission modes for Rel-10", Samsung, 6 April 2010, discloses also the use of DCI format 2B for the dual layer transmission in LTE Rel-10.

### SUMMARY

According to one or more embodiments disclosed and claimed herein, minimal extension of DCI format 2B is proposed, to support Rel-10 functionalities, *e*.*g*. single cell MIMO, CoMP or possibly relaying/HetNet.

In disclosed embodiments, a new DCI format is proposed in Rel-10 to support Rel-10 MIMO transmission. In some embodiments, only two extra bits are introduced in a DCI format otherwise identical to format 2B, to signal rank up to eight, by reusing the SI bit 16 while at the same time supporting different MU-MIMO dimensioning for the important case of rank-1 and rank-2. This new DCI format can potentially support not only single cell downlink transmission, but also some other Rel-10 functionalities, *e*.*g*. CoMP or relaying/HetNet.

One embodiment relates to a method in a transmitter for indicating to a receiver a number of signaling layers used in a downlink transmission from the transmitter by signaling a message in a DCI format. Transmitted in the DCI format are two bits indicating the number of layers used in the downlink transmission.

Another embodiment relates to a method in a receiver for enabling the receiver to determine the number of layers used in downlink transmission. A message is received in a DCI format comprising two bits indicating the number of layers. The receiver is configured to receive data according to the DCI and the number of layers.

Yet another embodiment relates to a transmitter operative to indicate to a receiver a number of signaling layers used in a downlink transmission from the transmitter. The transmitter includes a signaling circuit operative to signal a message in a DCI format comprising two bits indicating a number of layers in the downlink transmission.

Still another embodiment relates to receiver operative to determine a number of layers used in a downlink transmission. The receiver includes a receiving circuit operative to receive a message in a DCI format comprising two bits indicating a number of layers. The receiver further includes a configuring circuit operative to configure the receiver to receive data according to the DCI and number of layers.

### BRIEF DESCRIPTION OF THE DRAWINGS

Figure 1 is a functional block diagram of a prior art DM-RS pattern supporting up to rank eight transmission.
Figure 2 is a table depicting the encoding of DCI bits according to prior art DCI format 2B, and application cases signaled.
Figure 3 is a functional block diagram of a transmitter and receiver in a wireless communication network, with the transmitter transmitting DCI bits according to one embodiment of the present invention.
Figure 4 is a table depicting one encoding of DCI bits, and application cases signaled, according to one embodiment of the present invention.
Figure 5 is a table depicting one encoding of DCI bits, and application cases signaled, according to another embodiment of the present invention.
Figure 6 is a table depicting one encoding of DCI bits, and application cases signaled, according to yet another embodiment of the present invention.
Figure 7 is a table depicting one encoding of DCI bits, and application cases signaled, according to still another embodiment of the present invention.
Figure 8 is a flow diagram of a method by a transmitter of indicating to a receiver a number of signaling layers used in a downlink transmission from the transmitter.
Figure 9 is a flow diagram of a method by a receiver of determining the number of layers used in downlink transmission from a transmitter.

### DETAILED DESCRIPTION

As mentioned above, Rel-10 will support up to eight layer transmission. TM8 will remain as specified in Rel-9. DCI format 2B has several deficiencies, and consequently a new DCI format will be required for Rel-10. First, to support up to eight layers transmission, rank will need to be indicated to UE for proper data demodulation. DCI format 2B does not specify this directly, but rather implies rank-1 or rank-2 by whether one TB 12 is disabled or not. Second, according to MU-MIMO dimensioning in Rel-10, rank 1-2 is applicable to SU/MU, while rank 3-8 is defined for SU only. This differs from Rel-9 TM8, where SU and MU have the same scope of up to two layers transmission. Third, a new DCI format may be used not only used for single cell MIMO, but also for Coordinated Multipoint (CoMP), or possibly relaying/heterogeneous network (HetNet). A final consideration is that, since Rel-9 TM8 will be a subset of Rel-10 eight layers transmission, DCI format 2B should be re-used as much as possible in the new DCI format.

Various embodiments of the present invention are presented herein, as applied to different applications or considerations. Only part of the payload is depicted herein, to describe the proposed DCI format, *e*.*g*. 1-bit NDI 14, 1-bit SI 16, disabled/enabled TBs 12, and an additional two bits 20, denoted A and B. Additional bit fields for other purposes can of course also be present.

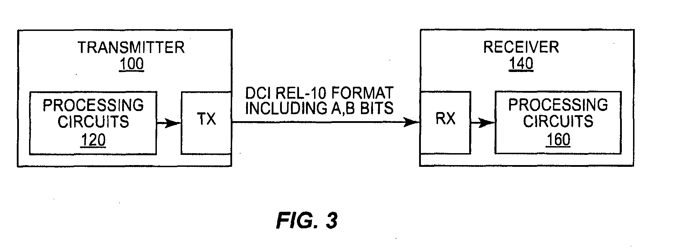

Figure 3 depicts a transmitter 100, such as in a radio base station, with processing circuits 120 operative to determine number of layers to be used in a downlink transmission (based on channel quality or configuration). When the number of layers, *i*.*e*. rank value, is determined, the transmitter 100 transmits over a transmitting circuit, Tx, information in a DCI format compatible with 3GPP Rel-10 indicating rank value to a receiver 140, such as in user equipment. In some embodiments, the Rel-10 DCI format is an extension to format 2B, which comprises two bits A, B used to indicate rank value. The receiver 140 receives over a receiving circuit, Rx, the information in the DCI format and from that information, the receiver determines in processing circuits 160 the number of layers used in the transmission.

The transmitter 100 comprises a processing circuit 120 operative to direct a transmitting circuit Tx to transmit a message in a downlink control information (DCI) format, which DCI format comprises two bits (A,B) indicating number of layers, also referred to as transmission rank.

The receiver 140 comprise a receiving circuit Rx configured to receive a message in a DCI format, which format comprises two bits indicating number of layers, and a processing circuit 160 operative to configure the receiver 140 to receive data according to the downlink control information and number of layers.

The mechanisms described herein for enabling signalling between the transmitter 100 and the receiver 140 in the radio communications network may be implemented through one or more processors, such as processing circuits 120 in the transmitter 100 or processing circuits 160 in the receiver 140, together with computer program code for performing the functions of embodiments described herein. The program code mentioned above may also be provided as a computer program product, for instance in the form of a machine-readable data carrier carrying computer program code for performing embodiments of the present invention when loaded into processing circuits 120, 160 in the transmitter 100 or receiver 140, respectively. One such machine-readable data carrier may be in the form of a CD-ROM disc. Of course, other suitable data carriers may include non-volatile memory, magnetic disc, and the like. The computer program code may furthermore be provided as pure program code on a server and downloaded to the transmitter 100 or the receiver 140.

### SI for Rank Signaling

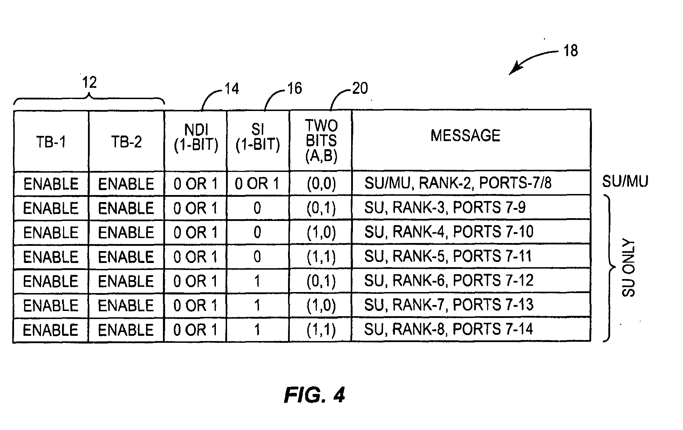

The table 18 of Figure 4 depicts that, when both transport blocks 12 are enabled, only rank-1 is SU/MU; ranks 3-8 are SU only. In this case, according to one embodiment, signaling overhead is reduced by using the 1-bit SI 16, along with newly defined bits A,B 20, to implicitly indicate rank values 3-8 to the UE (since 1-bit SI 16 is not used for SU case). Rank-2 transmission is hybrid SU/MU. In one embodiment, the 1-bit SI 16 is used to separate co-scheduled UEs. In this embodiment, the new two bits 20 value of (0,0) are used to uniquely indicate to the UE the rank value of 2. Figure 4 depicts one representative encoding of the two bits 20 and the 1-bit SI 16; other encodings are within the scope of the present invention.

### SI for MU-MIMO dimensioning

Further to the embodiment described above, the new bits 20 can also be efficiently used for rank 1-2 to indicate more complicated SU/MU case for Rel-10 UEs, *e*.*g*., indication of DM-RS ports or CDM group. Three SU/MU application cases are considered.

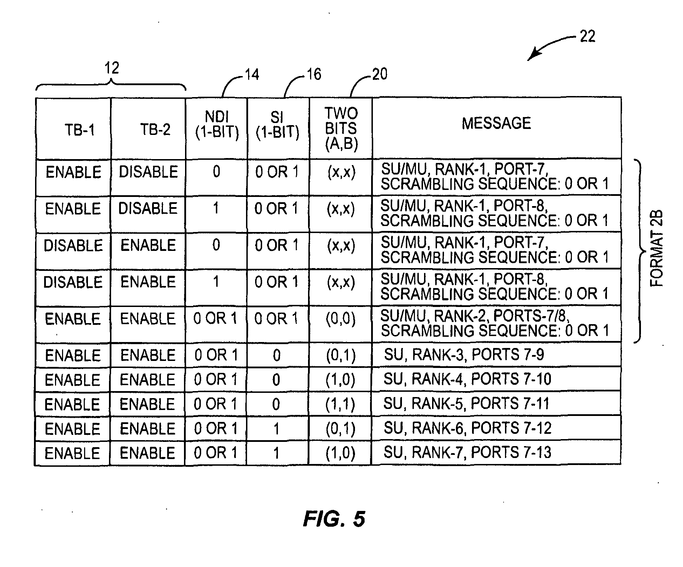

A first case, in which two DM-RS ports are signaled with two scrambling sequences, is depicted in table 22 of Figure 5. Note that the first five rows are the same as DCI format 2B, where 1-bit SI 16 is used to signal ports 7/8 in CDM-1. In this case, the two new bits 20 are not used for rank-1, and are reserved. Figure 5 depicts one representative encoding of the two bits 20 and the 1-bit SI 16 to signal rank 3-8; other encodings are within the scope of the present invention.

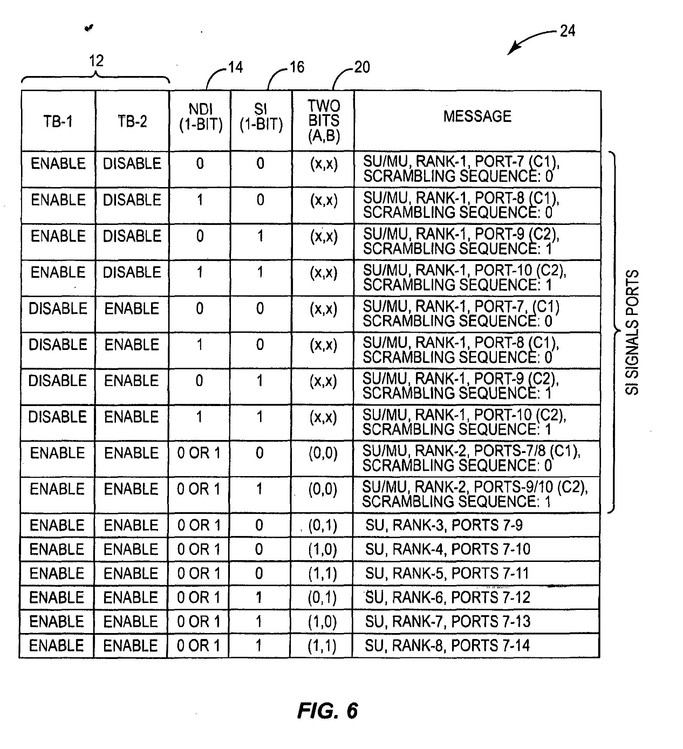

A second case, in which four DM-RS ports in two CDM groups are signaled with one scrambling sequence, is depicted in table 24 of Figure 6. In this case, ports 7/8 in CDM-1 and ports 9/10 in CMD-2 are used, where length-2 OCC will be applied. In one embodiment, rank 1/2 messages in the first ten rows may use the 1-bit SI 16 for signaling the ports. In another embodiment, the ports are signaled by exploiting the new bits 20. Because co-scheduled UEs are allocated with orthogonal ports, co-scheduling of Rel-9 and Rel-10 UEs can be enabled, even with the same scrambling sequence. Accordingly, the 1-bit SI 16 is free, and can be used for the signaling of the ports since further separation between co-scheduled UEs is no longer needed. Hence, the use of scrambling sequences is limited. In another embodiment, either the A-bit or B-bit of the new bits 20 can be utilized to do the same thing as the 1-bit SI 16, to release the limitation of scrambling sequences. Figure 6 depicts one representative encoding of the two bits 20 and the 1-bit SI 16; other encodings are within the scope of the present invention.

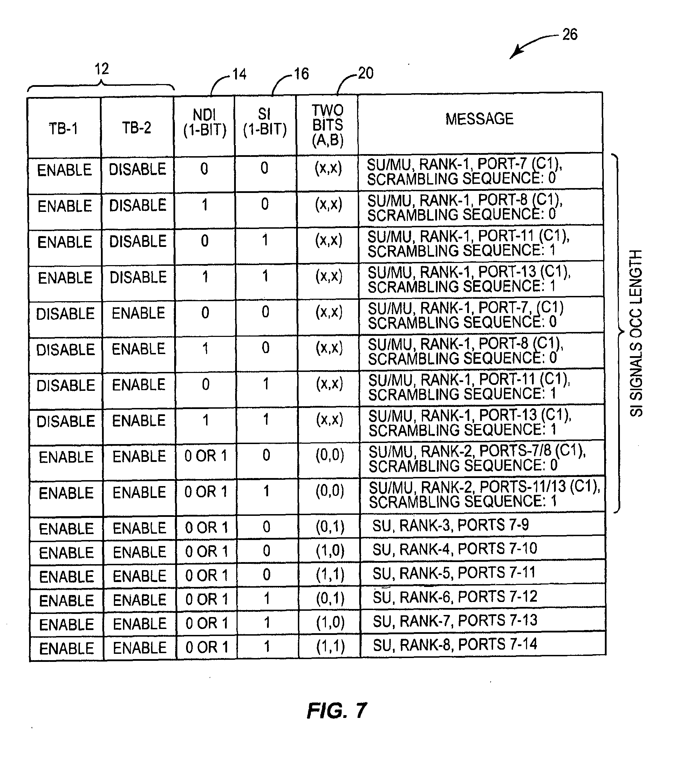

A third case, in which four DM-RS ports in CDM group one is signaled with one scrambling sequence, is depicted in table 26 of Figure 7. In this case, ports 7/8/11113 in CDM-1 are used, where length-4 OCC will be applied. In one embodiment, rank 1/2 messages in the first ten rows may use the 1-bit SI 16 for signaling the OCC length. Table 26 is the same as table 24 of Figure 6, but with different explanation of re-using the 1-bit SI 16. In another embodiment, either A-bit or B-bit of the new bits 20 can be utilized to do the same thing as the 1-bit SI 16, to release the limitation of scrambling sequences. Figure 6 depicts one representative encoding of the two bits 20 and the 1-bit SI 16; other encodings are within the scope of the present invention.

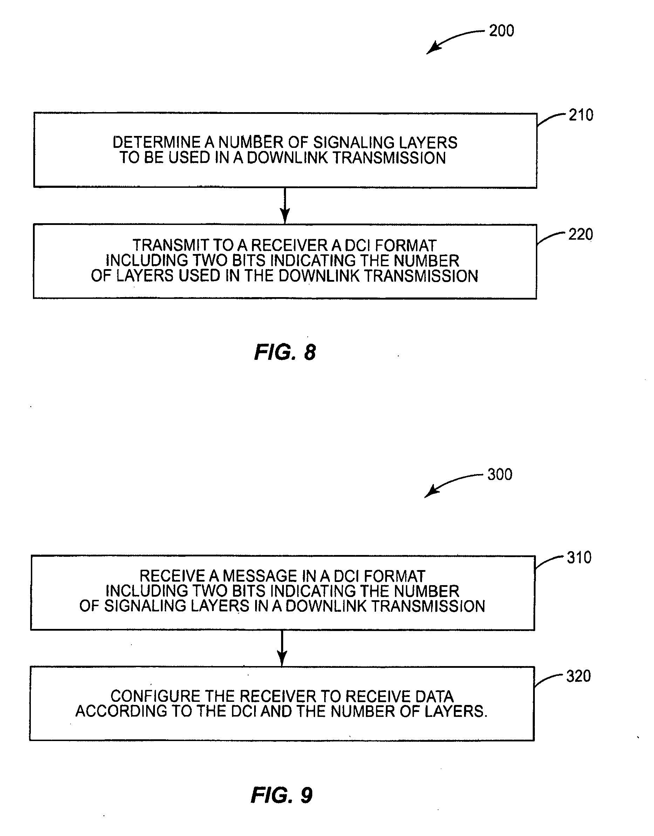

Figure 8 depicts a method 200 of transmitting signaling layer information to a receiver by a transmitter in a wireless communication network, such as an eNB. The transmitter determines a number of signaling layers to be used in a downlink transmission (block 210), and then transmits to a receiver a DCI format including two bits 20 indicating the number of layers used in the downlink transmission (block 220). In various embodiments, as described above, the two bits 20 may be jointly encoded with existing DCI format 2B bits, such as the SI 16, to convey various information in addition to the signaling layer information.

Figure 9 depicts a method 300 of receiving signaling layer information by a receiver in a wireless communication network, such as a UE. The receiver receives a message in a DCI format including two bits 20 indicating the number of signaling layers in a downlink transmission (block 310), and then configures the receiver circuit Rx to receive data according to the DCI and the number of layers (block 320). In various embodiments, as described above, the two bits 20 may be jointly encoded with existing DCI format 2B bits, such as the SI 16, to convey various information in addition to the signaling layer information.

### Extension to Signaling Other Scenarios

Note that in the above embodiments, in some cases, e.g., rank-1, the two new bits 20 are reserved. In one embodiment, in these cases, the two new bits 20 may be utilized to signal other application scenarios, particularly those that primarily target rank-1. Such scenarios include, by way of example and without limitation, single cell MU-MIMO, CoMP, or relaying/HetNet. The signaling information could communicate to the UE whether the downlink transmission is conducted in one of those scenarios, according to any encodings of the reserved bits, which may be readily devised for particular applications by those of skill in the art, having the benefit of the teachings of the present disclosure.

New DCI formats for Rel-10, based on DCI format 2B and using two new bits 20 to support Rel-10 MIMO transmission, according to embodiments described above, present numerous advantages. First, the rank value of more than two layers - indeed, as many as eight layers - can be implicitly indicated by joint coding using existing 1-bit SI 16 and introducing only two new bits 20. The standard DCI format 2B can be re-used to the greatest extent possible. Second, for the support of different MU-MIMO dimensioning, 1-bit SI 16 can be re-used as much as possible to efficiently save control signaling, while still allowing scrambling indication for the important cases of rank-1 and rank-2. Finally, the proposed Rel-10 DCI format can separate SU and MU applications, and may be used for other possible Rel-10 functionalities in the case of rank-1, *e*.*g*. CoMP, relaying, and HetNet.

The present invention may, of course, be carried out in other ways than those specifically set forth herein without departing from essential characteristics of the invention. The present embodiments are to be considered in all respects as illustrative and not restrictive.

## Claims

1. A method (200) in a transmitter (100) for indicating to a receiver (140) a transmission rank value used in a downlink transmission from the transmitter (100) by transmitting a message in a downlink control information, DCI, format, wherein the DCI format comprises a 1-bit New Data Indicator, NDI, (14), a 1-bit Scrambling Identity, SI, (16), and disabled or enabled Transport Blocks, TBs, (12), the method being **characterised in that** it further comprises:
transmitting (210), in the DCI format, two additional bits (20) that are jointly encoded with the 1-bit Scrambling Identity (16) to implicitly indicate the transmission rank values of 3-8.

2. The method of claim 1, wherein the DCI format is based on DCI format 2B, as defined in 3GPP TS 36.212 v9.0.0, modified to support 8x8 Multiple Input Multiple Output, MIMO, transmission, and wherein the modification comprises the addition of the two additional bits (20) to DCI format 2B.

3. The method of claim 2, wherein the Scrambling Identity (16) is used for different Multi User, MU,-MIMO dimensioning.

4. The method of claim 2, wherein four demodulation reference signal ports in two code division multiplexing groups are signaled with one scrambling sequence.

5. The method of claim 4, wherein ports 7 and 8 in one code division multiplexing group and ports 9 and 10 in another code division multiplexing group are used.

6. The method of claim 5, wherein the ports are signaled using the Scrambling Identity (16) for rank-1 and rank-2 messages.

7. The method of claim 6 wherein the ports are signaled using either or both of the two additional bits (20).

8. The method of claim 2 wherein four demodulation reference signal ports in one code division multiplexing group are signaled with one scrambling sequence.

9. The method of claim 8, wherein ports 7, 8, 11, and 13 in one code division multiplexing group are used, and wherein a length-4 orthogonal cover code is applied.

10. The method of claim 9, wherein the orthogonal cover code length is signaled using the Scrambling Identity (16) for rank-1 and rank-2 messages

11. The method of claim 9, wherein the orthogonal cover code length is signaled using either or both of the two additional bits (20).

12. The method of claim 1, wherein the two additional bits (20) are used for signaling other transmission scenarios.

13. The method of claim 12, wherein the other transmission scenarios are selected from the group consisting of single cell Multi user Multiple Input Multiple Output, MU-MIMO, Coordinated Multipoint, CoMP, and relaying/ Heterogeneous Network, HetNet.

14. A method (300) in a receiver (140) for enabling the receiver (140) to determine a transmission rank value used in downlink transmission, the method comprising:
receiving (310) a message in a downlink control information, DCI, format, configuring (320) the receiver (140) to receive data according to the DCI format and the indicated transmission rank value, wherein the DCI format comprises a 1-bit New Data Indicator, NDI, (14), a 1-bit Scrambling Identity, SI, (16), and disabled or enabled Transport Blocks, TBs, (12), and is **characterised in that** it further comprises two bits (20) that are jointly encoded with the 1-bit Scrambling Identity (16) to implicitly indicate the transmission rank values of 3-8.

15. A transmitter (100) operative to indicate to a receiver (140) a transmission rank value used in a downlink transmission from the transmitter (100), comprising:
a processing circuit (120) operative to direct a transmitting circuit, Tx, to transmit a message in a downlink control information, DCI, format, wherein the DCI format comprises a 1-bit New Data Indicator, NDI, (14), a 1-bit Scrambling Identity, SI, (16), and disabled or enabled Transport Blocks, TBs, (12), the DCI format **characterised in that** it further comprises two additional bits (20) that are jointly encoded with the 1-bit Scrambling Identity (16) to implicitly indicate the transmission rank values of 3-8.

16. The transmitter (100) of claim 15, wherein the DCI format is based on DCI format 2B, as defined in 3GPP TS 36.212 v9.0.0, modified to support 8x8 Multiple-Input, Multiple-Output, MIMO, transmission, and wherein the modification comprises the addition of the two additional bits (20) to DCI format 2B.

17. The transmitter (100) of claim 16, wherein the transmitter (100) is configured to use the Scrambling Identity (16) for different Multi User, MU, -MIMO dimensioning.

18. The transmitter (100) of claim 16, wherein the transmitter (100) is configured to signal four demodulation reference signal ports in two code division multiplexing groups with one scrambling sequence.

19. The transmitter (100) of claim 18, wherein the transmitter (100) is configured to use ports 7 and 8 in one code division multiplexing group and ports 9 and 10 in another code division multiplexing group.

20. The transmitter (100) of claim 19, wherein the transmitter (100) is configured to signal the ports using the Scrambling Identity (16) for rank-1 and rank-2 messages.

21. The transmitter (100) of claim 19, wherein the transmitter (100) is configured to signal the ports using either or both of the two additional bits (20).

22. The transmitter (100) of claim 16, wherein the transmitter (100) is configured to signal four demodulation reference signal ports in one code division multiplexing group with one scrambling sequence.

23. The transmitter (100) of claim 22, wherein the transmitter (100) is configured to use ports 7, 8, 11, and 13 in one code division multiplexing group, and to apply a length-4 orthogonal cover code.

24. The transmitter (100) of claim 23, wherein the transmitter (100) is configured to signal the orthogonal cover code length using the Scrambling Identity (16) for rank-1 and rank-2 messages

25. The transmitter (100) of claim 23, wherein the transmitter (100) is configured to signal the orthogonal cover code length using either or both of the two additional bits (20).

26. The transmitter (100) of claim 15, wherein the transmitter (100) is configured to also use the two additional bits (20) for signaling other transmission scenarios.

27. The transmitter (100) of claim 26, wherein the other transmission scenarios are selected from the group consisting of single cell Multiuser Multiple Input Multiple Output, MU-MIMO, Coordinated Multipoint, CoMP, and relaying/ Heterogeneous Network, HetNet.

28. A receiver (140) operative to determine a transmission rank value used in a downlink transmission, the receiver comprising:
a receiving circuit, Rx, operative to receive a message in a downlink control information, DCI, format, a processing circuit (160) operative to configure the receiver (140) to receive data according to the DCI format and the indicated transmission rank value, wherein the DCI format comprises a 1-bit new data indicator, NDI, (14), a 1-bit Scrambling Identity, SI, (16), and disabled or enabled Transport Blocks, TBs, (12), and is **characterised in that** it further comprises two additional bits (20) that are jointly encoded with the 1-bit Scrambling Identity (16) to implicitly indicate the transmission rank values of 3-8.

## Patentansprüche

1. Verfahren (200) in einem Sender (100) zum Anzeigen für einen Empfänger (140) eines Übertragungsrangwerts, der bei einer Downlink-Übertragung vom Sender (100) verwendet wird, durch Senden einer Nachricht in einem Downlink-Steuerungsinformations, DCI,-Format, wobei das DCI-Format einen 1-Bit-Neue-Daten-Indikator, NDI, (14), eine 1-Bit-Verwürfelungskennung, SI, (18), und deaktivierte oder aktivierte Transportblöcke, TBs, (12), umfasst, und das Verfahren **dadurch gekennzeichnet ist, dass** es ferner umfasst:
Senden (210) im DCI-Format zweier zusätzlicher Bits (20), die zusammen mit der 1-Bit-Verschlüsselungskennung (16) codiert sind, um implizit die Übertragungsrangwerte von 3 bis 8 anzuzeigen.

2. Verfahren nach Anspruch 1, wobei das DCI-Format auf dem DCI-Format 2B basiert, das in 3GPP TS 36.212 v9.0.0 definiert und so modifiziert ist, dass es 8x8 Mehrfacheingangs-Mehrfachausgangs, MIMO, -Übertragung unterstützt, und wobei die Modifikation die Hinzufügung der zwei zusätzlichen Bits (20) zum DCI-Format 2B umfasst.

3. Verfahren nach Anspruch 2, wobei die Verschlüsselungskennung (16) für verschiedene Mehrteilnehmer, MU,-MIMO-Dimensionierung ist.

4. Verfahren nach Anspruch 2, wobei vier Demodulationsreferenzsignalports in zwei Codemultiplexgruppen mit einer Verwürfelungsfolge signalisiert werden.

5. Verfahren nach Anspruch 4, wobei die Ports 7 und 8 in einer Codemultiplexgruppe und die Ports 9 und 10 in einer anderen Codemultiplexgruppe verwendet werden.

6. Verfahren nach Anspruch 5, wobei die Ports unter Verwendung der Verwürfelungskennung (16) für Rang-1- und Rang-2-Nachrichten signalisiert werden.

7. Verfahren nach Anspruch 6, wobei die Ports unter Verwendung eines oder beider der zwei zusätzlichen Bits (20) signalisiert werden.

8. Verfahren nach Anspruch 2, wobei vier Demodulationsreferenzsignalports in einer Codemultiplexgruppe mit einer Verwürfelungsfolge signalisiert werden.

9. Verfahren nach Anspruch 8, wobei die Ports 7, 8, 11 und 13 in einer Codemultiplexgruppe verwendet werden, und wobei ein orthogonaler Länge-4-Abdeckcode angewendet wird.

10. Verfahren nach Anspruch 9, wobei die Länge des orthogonalen Abdeckcodes unter Verwendung der Verwürfelungskennung (16) für Rang-1- und Rang-2-Nachrichten signalisiert wird.

11. Verfahren nach Anspruch 9, wobei die Länge des orthogonalen Abdeckcodes unter Verwendung eines oder beider der zwei zusätzlichen Bits (20) signalisiert wird.

12. Verfahren nach Anspruch 1, wobei die zwei zusätzlichen Bits (20) zum Signalisieren von anderen Übertragungsszenarios verwendet werden.

13. Verfahren nach Anspruch 12, wobei die anderen Übertragungsszenarios aus der Gruppe bestehend aus koordiniertem Mehrpunkt, CoMP,-Netz mit Mehrteilnehmer-Mehrfacheingang-Mehrfachausgang, MU-MIMO, in einer einzelnen Zelle und heterogenem Netz, HetNet, mit Relaistechnik ausgewählt sind.

14. Verfahren (300) in einem Empfänger (140) zum Befähigen des Empfängers (140), einen Übertragungsrangwert zu bestimmen, der bei einer Downlink-Übertragung verwendet wird, wobei das Verfahren umfasst:
Empfangen (310) einer Nachricht in einem Downlink-Steuerungsinformations,- DCI, Format, Konfigurieren (320) des Empfängers (140), um Daten gemäß dem DCI-Format und dem angezeigten Übertragungsrangwert zu empfangen, wobei das DCI-Format einen 1-Bit-Neue-Daten-Indikator, NDI, (14), eine 1-Bit-Verwürfelungskennung, SI, (16), und deaktivierte oder aktivierte Transportblöcke, TBs, (12), umfasst, und **dadurch gekennzeichnet ist, dass** es ferner zwei Bits (20) umfasst, die zusammen mit der 1-Bit-Verschlüsselungskennung (16) codiert sind, um implizit die Übertragungsrangwerte von 3 bis 8 anzuzeigen.

15. Sender (100), der so funktioniert, dass er einem Empfänger (140) einen Übertragungsrangwert anzeigt, der bei einer Downlink-Übertragung vom Sender (100) verwendet wird, umfassend:
eine Verarbeitungsschaltung (120), die so funktioniert, dass sie eine Sendeschaltung, Tx, steuert, um eine Nachricht in einem DownlinkSteuerungsinformations, DCI,-Format zu senden, wobei das DCI-Format einen 1-Bit-Neue-Daten-Indikator, NDI, (14), eine 1-Bit-Verwürfelungskennung, SI, (16), und deaktivierte oder aktivierte Transportblöcke, TBs, (12), umfasst, das DCI-Format **dadurch gekennzeichnet ist, dass** es ferner zwei zusätzliche Bits (20) umfasst, die zusammen mit der 1-Bit-Verschlüsselungskennung (16) codiert sind, um implizit die Übertragungsrangwerte von 3 bis 8 anzuzeigen.

16. Sender (100) nach Anspruch 15, wobei das DCI-Format auf dem DCI-Format 2B basiert, das in 3GPP TS 36.212 v9.0.0 definiert und so modifiziert ist, dass es 8x8 Mehrfacheingangs-Mehrfachausgangs, MIMO,-Übertragung unterstützt, und wobei die Modifikation die Hinzufügung der zwei zusätzlichen Bits (20) zum DCI-Format 2B umfasst.

17. Sender (100) nach Anspruch 16, wobei der Sender (100) so konfiguriert ist, dass er die Verwürfelungskennung (16) für verschiedene Mehrteilnehmer, MU,-MIMO-Dimensionierung verwendet.

18. Sender (100) nach Anspruch 16, wobei der Sender (100) so konfiguriert ist, dass er vier Demodulationsreferenzsignalports in zwei Codemultiplexgruppen mit einer Verwürfelungsfolge signalisiert.

19. Sender (100) nach Anspruch 18, wobei der Sender (100) so konfiguriert ist, dass er die Ports 7 und 8 in einer Codemultiplexgruppe und die Ports 9 und 10 in einer anderen Codemultiplexgruppe verwendet.

20. Sender (100) nach Anspruch 19, wobei der Sender (100) so konfiguriert ist, dass er die Ports unter Verwendung der Verwürfelungskennung (16) für Rang-1- und Rang-2-Nachrichten signalisiert.

21. Sender (100) nach Anspruch 19, wobei der Sender (100) so konfiguriert ist, dass er die Ports unter Verwendung eines oder beider der zwei zusätzlichen Bits (20) signalisiert.

22. Sender (100) nach Anspruch 16, wobei der Sender (100) so konfiguriert ist, dass er vier Demodulationsreferenzsignalports in einer Codemultiplexgruppe mit einer Verwürfelungsfolge signalisiert.

23. Sender (100) nach Anspruch 22, wobei der Sender (100) so konfiguriert ist, dass er die Ports 7, 8, 11 und 13 in einer Codemultiplexgruppe verwendet, und einen orthogonalen Länge-4-Abdeckcode anwendet.

24. Sender (100) nach Anspruch 23, wobei der Sender (100) so konfiguriert ist, dass er die Länge des orthogonalen Abdeckcodes unter Verwendung der Verwürfelungskennung (16) für Rang-1- und Rang-2-Nachrichten signalisiert.

25. Sender (100) nach Anspruch 23, wobei der Sender (100) so konfiguriert ist, dass er die Länge des orthogonalen Abdeckcodes unter Verwendung eines oder beider der zwei zusätzlichen Bits (20) signalisiert.

26. Sender (100) nach Anspruch 15, wobei der Sender (100) so konfiguriert ist, dass er die zwei zusätzlichen Bits (20) außerdem zum Signalisieren anderer Übertragungsszenarios verwendet.

27. Sender (100) nach Anspruch 26, wobei die anderen Übertragungsszenarios aus der Gruppe bestehend aus koordiniertem Mehrpunkt, CoMP, -Netz mit Mehrteilnehmer-Mehrfacheingang-Mehrfachausgang, MU-MIMO, in einer einzelnen Zelle und heterogenem Netz, HetNet, mit Relaistechnik ausgewählt sind.

28. Empfänger (140), der so funktioniert, dass er einen Übertragungsrangwert in einer Downlink-Übertragung bestimmt, wobei der Empfänger umfasst:
eine Empfangseinheit, Rx, die so funktioniert, dass sie eine Nachricht in einem Downlink-Steuerungsinformations, DCI,-Format empfängt, eine Verarbeitungseinheit (180), die so funktioniert, dass sie den Empfänger (140) konfiguriert, um Daten gemäß dem DCI-Format und dem angezeigten Übertragungsrangwert zu empfangen, wobei das DCI-Format einen 1-Bit-Neue-Daten-Indikator, NDI, (14), eine 1-Bit-Verwürfelungskennung, SI, (16), und deaktivierte oder aktivierte Transportblöcke, TBs, (12), umfasst, und **dadurch gekennzeichnet ist, dass** es ferner zwei zusätzliche Bits (20) umfasst, die zusammen mit der 1-Bit-Verschlüsselungskennung (16) codiert sind, um implizit die Übertragungsrangwerte von 3 bis 8 anzuzeigen.

## Revendications

1. Procédé (200) dans un émetteur (100) pour indiquer à un récepteur (140) une valeur de rang de transmission utilisée dans une transmission de liaison descendante depuis l'émetteur (100) en émettant un message dans un format d' information de commande de liaison descendante, DCI, dans lequel le format DCI comprend un indicateur de nouvelle donnée, NDI, (14) à 1 bit, une identité d'embrouillage, SI, (16) à 1 bit et des blocs de transport activés ou désactivés, TBs, (12), le procédé étant **caractérisé en ce qu'**il comprend en outre de :
transmettre (210), dans le format DCI, deux bits additionnels (20) qui sont codés conjointement avec l'identité d'embrouillage à 1 bit (16) pour indiquer implicitement les valeurs de rang de transmission de 3-8.

2. Procédé selon la revendication 1, dans lequel le format DCI est basé sur un format DCI 2B, tel que défini dans 3GPP TS 36.212 v9,0,0, modifié pour prendre en compte une transmission à entrées multiples et sorties multiples, MIMO, 8x8, et dans lequel la modification comprend l'addition de deux bits additionnels (20) au format DCI 2B.

3. Procédé selon la revendication 2, dans lequel l'identité d'embrouillage (16) est utilisée pour un dimensionnement MIMO multi-utilisateurs, MU, différent.

4. Procédé selon la revendication 2, dans lequel les ports de signal de référence de démodulation dans deux groupes de multiplexage par répartition de code sont signalés avec une séquence d'embrouillage.

5. Procédé selon la revendication 4, dans lequel les ports 7 et 8 dans un groupe de multiplexage par répartition de code et les ports 9 et 10 dans un autre groupe de multiplexage par répartition de code sont utilisés.

6. Procédé selon la revendication 5, dans lequel les ports sont signalés en utilisant l'identité d'embrouillage (16) pour les messages de rang 1 et de rang 2.

7. Procédé selon la revendication 6, dans lequel les ports sont signalés en utilisant l'un ou l'autre ou les deux des deux bits additionnels (20).

8. Procédé selon la revendication 2, dans lequel quatre ports de signal de référence de démodulation dans un groupe de multiplexage par répartition de code sont signalés avec une séquence d'embrouillage.

9. Procédé selon la revendication 8, dans lequel les ports 7, 8, 11 et 13 dans un groupe de multiplexage par répartition de code sont utilisés, et dans lequel un code de couverture orthogonale de longueur 4 est appliqué.

10. Procédé selon la revendication 8, dans lequel la longueur du code de couverture orthogonale est signalée en utilisant l'identité d'embrouillage (16) pour les messages de rang 1 et de rang 2.

11. Procédé selon la revendication 9, dans lequel la longueur du code de couverture orthogonale est signalée en utilisant l'un ou l'autre ou les deux des deux bits additionnels (20).

12. Procédé selon la revendication 1, dans lequel les deux bits additionnels (20) sont utilisés pour signaler d'autres scénarios de transmission.

13. Procédé selon la revendication 2, dans lequel les autres scénarios de transmission sont sélectionnés dans le groupe constitué de MU-MIMO, entrées multiples sorties multiples multi-utilisateurs de cellule individuelle, multipoints coordonnés, CoMP, et réseau de relais/hétérogène, HetNet.

14. Procédé (300) dans un récepteur (140) pour activer le récepteur (140) afin de déterminer une valeur de rang de transmission utilisée dans une transmission en liaison descendante, le procédé comprenant de :
recevoir (310) un message dans un format d'information de commande de liaison descendante, DCI ;
configurer (320) le récepteur (140) pour recevoir des données selon le format DCI et la valeur de rang de transmission indiquée, dans lequel le format DCI comprend un indicateur de nouvelle donnée à 1 bit, NDI, (14), une identité d'embrouillage à 1 bit, SI,(16) et des blocs de transport, TBs (12) activés ou désactivés et est **caractérisé en ce qu'**il comprend en outre deux bits (20) qui sont codés conjointement avec l'identité d'embrouillage à 1 bit (16) pour indiquer implicitement la valeur de rang de transmission de 3-8.

15. Emetteur (100) opérationnel pour indiquer à un récepteur (140) une valeur de rang de transmission utilisée dans une transmission en liaison descendante depuis l'émetteur (100), comprenant :
un circuit de traitement (120) opérationnel pour donner instruction à un circuit d'émission, Tx, d'émettre un message dans un format d'information de commande en liaison descendante, DCI, dans lequel le format DCI comprend un indicateur de nouvelle donnée à 1 bit, NDI, (14), une identité d'embrouillage à 1 bit, SI, (16) et des blocs de transport, TBs (12), désactivés ou activés, le format DCI étant **caractérisé en ce qu'**il comprend deux bits additionnels (20) et l'identité d'embrouillage à 1 bit(16)qui sont codés conjointement afin d'indiquer implicitement les valeurs de rang de transmission de 3-8.

16. Emetteur (100) selon la revendication 15, dans lequel le format DCI est basé sur un format DCI 2B, tel que défini dans 3GPP TS 36.212 v9,0,0, modifié pour prendre en compte une transmission à entrées multiples et sorties multiples, MIMO, 8x8, et dans lequel la modification comprend l'addition de deux bits additionnels (20) au format DCI 2B.

17. Emetteur (100) selon la revendication 16, dans lequel l'émetteur (100) est configuré pour utiliser l'identité d'embrouillage (16) pour un dimensionnement MIMO multi-utilisateurs, MU, différent.

18. Emetteur (100) selon la revendication 16, dans lequel l'émetteur (100) est configuré pour signaler quatre ports de signal de référence de démodulation dans deux groupes de multiplexage par répartition de code avec une séquence d'embrouillage.

19. Emetteur (100) selon la revendication 18, dans lequel l'émetteur (100) est configuré pour utiliser les ports 7 et 8 dans un groupe de multiplexage par répartition de code et les ports 9 et 10 dans un autre groupe de multiplexage par répartition de code.

20. Emetteur (100) selon la revendication 19, dans lequel l'émetteur (100) est configuré pour signaler les ports en utilisant l'identité d'embrouillage (16) pour des messages de rang 1 et de rang 2.

21. Emetteur (100) selon la revendication 19, dans lequel l'émetteur (100) est configuré pour signaler les ports en utilisant l'un et l'autre ou les deux des deux bits additionnels (20).

22. Emetteur (100) selon la revendication 16, dans lequel l'émetteur (100) est configuré pour signaler quatre ports de signal de référence de démodulation dans un groupe de multiplexage par répartition de code avec une séquence d'embrouillage.

23. Emetteur (100) selon la revendication 22, dans lequel l'émetteur (100) est configuré pour utiliser les ports 7,8,11 et 13 dans un groupe de multiplexage par répartition de code, et appliquer un code de couverture orthogonale de longueur 4.

24. Emetteur (100) selon la revendication 23, dans lequel l'émetteur (100) est configuré pour signaler la longueur du code de couverture orthogonale en utilisant l'identité d'embrouillage (16) pour les messages de rang 1 et de rang 2.

25. Emetteur (100) selon la revendication 23, dans lequel l'émetteur (100) est configuré pour signaler la longueur de code de couverture orthogonale en utilisant l'un ou l'autre ou les deux des deux bits additionnels (20).

26. Emetteur (100) selon la revendication 15, dans lequel l'émetteur (100) est configuré pour utiliser aussi les deux bits additionnels (20) pour signaler d'autres scénarios de transmission.

27. Emetteur (100) selon la revendication 26, dans lequel les autres scénarios de transmission sont sélectionnés dans le groupe constitué de MU-MIMO, entrées multiples sorties multiples multi-utilisateurs de cellule individuelle, multipoints coordonnés, CoMP, et réseau de relais/hétérogène, HetNet.

28. Récepteur (140) opérationnel pour déterminer une valeur de rang de transmission utilisée dans une transmission en liaison descendante, le récepteur comprenant :
un circuit de réception, Rx, opérationnel pour recevoir un message dans un format d'information de commande de liaison descendante, DCI, un circuit de traitement (160) opérationnel pour configurer le récepteur (140) afin de recevoir des données selon le format DCI et la valeur de rang de transmission indiquée, dans lequel le format DCI comprend un indicateur de nouvelle donnée à 1 bit, NDI, (14), une identité d'embrouillage à 1 bit, SI, (16) et des blocs de transport, TBs, (12) désactivés ou activés et est **caractérisé en ce qu'**il comprend en outre deux bits additionnels (20) qui sont codés conjointement avec l'identité d'embrouillage à 1 bit (16) pour indiquer implicitement les valeurs de rang de transmission de 3-8.
